# NOUVEAU FASCICULE DE BREVET EUROPEEN

(11) **EP 1 538 125 B2**
(45) Date de publication et mention de la décision concernant l'opposition: **06.07.2011**
(45) Mention de la délivrance du brevet: 30.08.2006
(21) Numéro de dépôt: 04366005.9
(22) Date de dépôt: 30.11.2004
(51) Int. Cl.: B67D 7/42, F16L 37/00, F25B 45/00

(54) **Embout de remplissage à tête de vissage pour bidons ou circuits de fluide**
Füllstutzen mit einem Schraubkopf für Behälter oder Flüssigkeitskreisläufe
Filling nozzle with screwing head for canisters or fluid circuits

(30) Priorité: 04.12.2003 FR 0314220
(43) Date de publication de la demande: 08.06.2005
(73) Titulaire: Soderel SA, 54180 Heillecourt (FR)
(72) Inventeur: Ancel, Jean-Luc, 13150 Tarascon (FR)
(74) Mandataire: Poupon, Michel

(56) Documents cités:
- FR-A- 2 653 203
- US-A- 5 560 407
- US-B1- 6 253 810

## Description

L'invention concerne un embout de remplissage pour des bidons ou circuits de fluides.

Ledit embout de remplissage sert d'interface entre l'ouverture ou le goulot d'un bidon ou d'un circuit à remplir ou tester, et l'installation de remplissage et/ou de test.

Préférentiellement l'invention s'applique aux lignes de montage pour la construction automobile.

Pour effectuer les tests d'étanchéité des bidons et circuits hydrauliques, puis leurs remplissages, l'opérateur dispose d'un élément appelé généralement embout de remplissage, ou adaptateur, ou poignée de bouchonnage, (et simplement embout dans la suite du texte) et connecté en extrémité d'une gaine (contenant les liaisons électriques, pneumatiques et hydrauliques) reliée à un banc de test ou de remplissage à une armoire ou une nacelle mobile de bord de ligne.

L'embout utilisé actuellement, et comme divulgué par exemple dans le document US-A-5560407, est du type schématisé en figure 1.

Le corps (a) de l'embout présente une forme coudée, avec un manchon-poignée (c) de préhension relié au système de test (non représenté) par une gaine de liaison (d), et une tête de centrage (e) d'axe longitudinal perpendiculaire à l'axe longitudinal du manchon.

La tête de centrage (e) est terminée par un ensemble adaptateur (f) à pinces (en général à quatre pinces) articulées, chacune terminée par une griffe (i).

En position de fermeture les pinces (h) enserrent un goulot cylindrique (j) et les griffes (i) se positionnent sous une collerette (k) dudit goulot.

Un système pneumatique intégré dans le corps de l'embout et non représenté actionne l'ouverture et la fermeture des griffes.

L'embout de remplissage est centré dans le goulot par un manchon de remplissage cylindrique (m) traversé axialement par le conduit de fluide.

En outre un joint (I) est prévu pour réaliser l'étanchéité pneumatique et hydraulique entre le manchon de remplissage et le bord du goulot, et cette technologie présente plusieurs inconvénients importants.

En effet, un même embout ne peut être utilisé sur des goulots de diamètres différents, il faut donc un embout spécifique par application.

Par ailleurs, actuellement de nombreux goulots comportent un pas de vis sans collerette d'accrochage.

Dans ce cas, la pression du joint sur le goulot est moins bonne et on peut observer des incidents lors des tests d'étanchéité du circuit à tester et/ou lors du remplissage.

Par ailleurs, on peut noter des détériorations du filetage.

Pour palier les inconvénients de l'art antérieur la demanderesse a cherché à s'affranchir du système à griffes tout en conservant les fonctions d'adaptation et d'étanchéité au niveau du goulot.

Ce but est atteint par l'invention qui consiste en un embout de remplissage ou de test des bidons ou circuits hydrauliques selon les caractéristiques de la revendication 1.

De façon préférentielle l'embout comporte en outre des moyens pour arrêter le vissage de la tête de vissage dès qu'un effort prédéterminé de serrage est atteint

On comprendra mieux l'invention à l'aide de la description ci-après faite en référence aux figures annexées suivantes :
- figure 1 : vue simplifiée d'un embout de l'art antérieur,
- figure 2 : vue d'ensemble d'un premier mode de réalisation non limitatif d'embout selon l'invention,
- figure 3 : vue en coupe longitudinale de l'embout de la figure 2,
- figure 4 : vue en trois dimensions et en coupe partielle d'un deuxième mode de réalisation de l'invention,
- figures 5, 6, 7 : vue en coupes partielles de l'extrémité basse de l'embout de la figure 4, montrant respectivement les trois étapes de :
   - positionnement sur le goulot d'un bidon,
   - appui et centrage et départ d'un cycle de vissage de la tête de l'embout,
   - serrage de la tête.

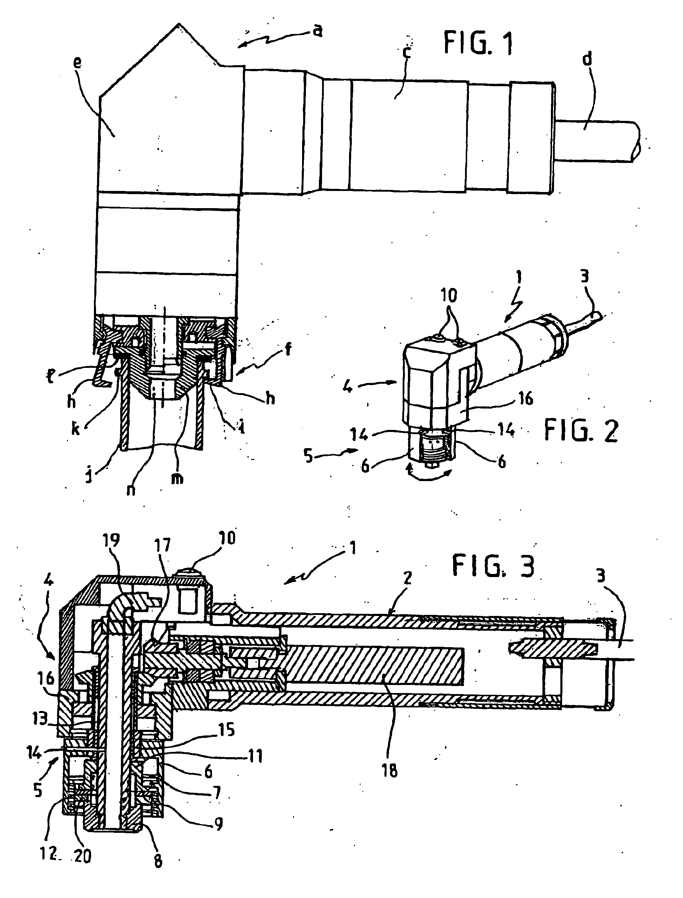

Selon un premier mode de réalisation, l'embout des figures 2 et 3 est conformé dans sa globalité comme celui de l'art antérieur, c'est-à-dire avec :
- un corps (1) de forme coudée composé d'un manchon-poignée (2) de préhension relié à une armoire de test (non représentée) par une gaine de liaison (3) et des connexions électriques et pneumatiques,
- et une tête de centrage (4) par exemple d'axe longitudinal perpendiculaire à l'axe longitudinal du manchon-poignée.

L'embout selon l'invention se distingue de celui de l'art antérieur en ce que la tête de centrage (4) est centrée sur le goulot à remplir par une tête de vissage (5) remplaçant le système à griffes de l'art antérieur.

Ladite tête de vissage (5) est composée d'un corps cylindrique (6) et d'un filetage intérieur (12) correspondant au filetage du goulot à mettre en étanchéité.

A l'intérieur de la tête de vissage (5) se trouve un système de centrage de l'embout sur le goulot composé d'un embout de centrage (8) de diamètre extérieur prévu pour être ajusté au diamètre intérieur du goulot et d'un système compliant composé d'un ressort (7) et d'une bague de butée (11) permettant de garantir le centrage tout au long du vissage.

Dans ce mode de réalisation l'embout (8) est mobile en translation selon la direction de son axe longitudinal, le corps (6) de la tête de vissage est mobile en rotation et le ressort (7) est logé entre le corps (6) de la tête de vissage et l'embout (8).

Un joint annulaire (20) est logé et immobilisé dans une gorge située sous une collerette supérieure (9) de l'embout de centrage (8).

Pendant le vissage de la tête, le ressort plaque l'embout de centrage (8) et donc le joint (20) sur le goulot jusqu'à ce que le ressort (7) soit comprimé et que l'embout de centrage (8) soit en butée sur la bague de butée (11).

L'embout de centrage (8) est emmanché sur un coulisseau (13) tubulaire coaxial avec la tête de centrage et la tête de vissage.

L'alésage interne longitudinal du coulisseau (13) débouche en sous face de l'embout de centrage et il est raccordé en partie haute par un raccord par exemple coudé (19) prévu pour recevoir une gaine d'amenée d'air ou de liquide (non représenté).

La tête de vissage (5) est fixée par une pluralité de vis vissées dans les trous filetés transversaux (14), à un support (15) tubulaire entraînable en rotation au moyen d'un système classique de guidage en rotation avec roulements et renvois d'angle (17) connecté à l'arbre de sortie d'un moteur (18) placé dans le manchon poignée (2).

Le corps (1) de l'embout comporte deux boutons (10) pour la mise en marche et l'arrêt du moteur (18) en cas de défaut.

L'embout de remplissage s'utilise comme suit.

L'opérateur introduit l'embout de centrage (8) dans le goulot (non représenté) du circuit ou du bidon à tester et/ou à remplir et laisse l'embout se positionner par son propre poids sur le goulot puis appuie sur un bouton (10) de mise en route.

Le moteur entraîne alors en rotation le corps (6) sans faire tourner l'embout de centrage (8) ni le joint (20) qui est appliqué contre le bord du goulot et assure l'étanchéité.

Le ressort garantit le centrage de l'embout pendant toute l'opération de vissage.

Le vissage s'arrête dès qu'un effort de vissage prédéterminé est atteint et détecté par une intensité si le moteur est électrique ou par un couple de serrage si le moteur est pneumatique.

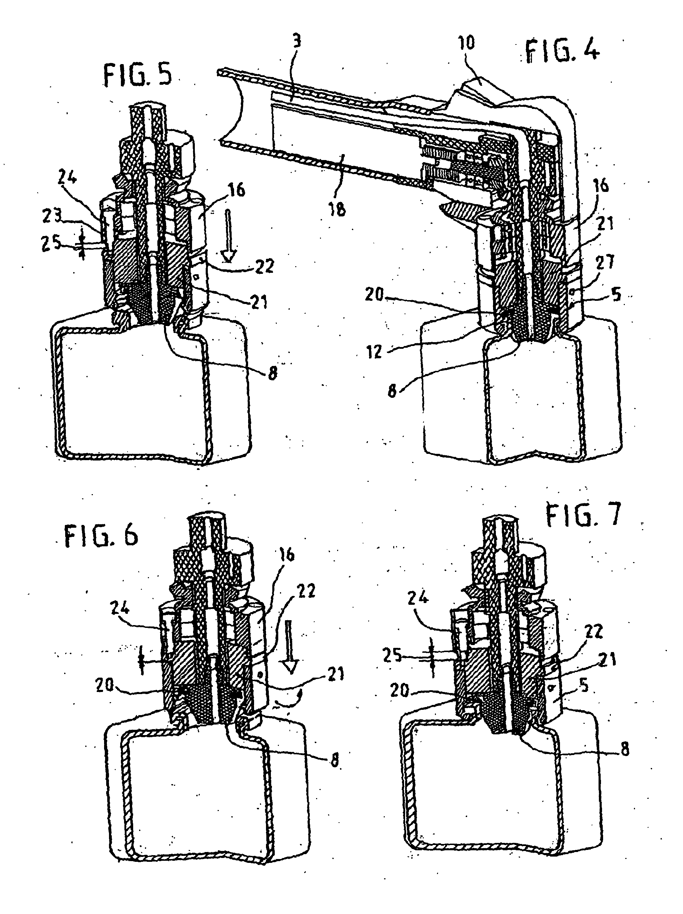

Selon le deuxième mode de réalisation des figures 4 à 7 la tête de vissage (5) mobile en rotation, est également mobile longitudinalement entre une position basse et une position haute tandis que l'embout de centrage (8) est fixe car emmanché sur un axe longitudinal (26) fixe remplaçant le coulisseau (13).

La tête de centrage est maintenue et guidée en translation par une pluralité de vis (24) longitudinales logées et épaulées dans le corps du support de tête (16) et venant se visser dans un centreur de tête de vissage (21) sur lequel est emmanché la tête de vissage (5). Celle-ci est appliquée contre une collerette annulaire (22) dudit centreur et fixée à celui-ci par des vis transversales (27).

En position haute, la collerette (22) du centreur vient en butée contre la sous face du support (16) et comprime des ressorts de compression (23) logés autour de chaque vis (24) (voir figure 6).

Sous l'action de rappel des ressorts le centreur retourne en position basse et effectue une course référencé (25) sur les figures 5 et 7.

Le mode opératoire est le suivant.

L'opérateur introduit l'embout de centrage (8) dans un goulot et positionne la tête sur ledit goulot (figure 5) puis appuie sur le manchon de centrage pour comprimer les ressorts (23) jusqu'à ce que le support (16) vienne en appui sur la collerette (22) (voir figure 6).

L'opérateur appuie alors sur un bouton de mise en route (10) et le vissage de la tête (5) démarre.

Lors de sa rotation, la tête descend le long du goulot jusqu'à ce que le joint plat (20) vienne au contact de la bordure supérieure du goulot (12), l'embout de centrage (8) et le support de tête (16) restant fixes.

Le vissage dévissage s'arrête dès qu'un effort prédéterminé de serrage est atteint et le remplissage ou le test peut commencer.

Ce mode de réalisation présente, par rapport au premier mode de réalisation, l'avantage de pouvoir être plus compact en hauteur car le raccord coudé (19) ne se déplace plus.

Dans tous les cas de figure la tête de vissage (5) selon l'invention s'applique aux goulots à vis avec ou sans collerette ou aux goulots quart de tour, sans les endommager et en garantissant une bonne étanchéité.

En outre, grâce au système de fixation à vis, la tête de vissage (5) est amovible, l'opérateur peut donc rapidement la remplacer par d'autres têtes de vissage interchangeables et dont les filetages (12) et les embouts de centrage (8) ont des dimensions adaptées à d'autres goulots.

Ainsi un même corps (1) d'embout peut être utilisé pour tester par exemple en étanchéité ou en pression et/ou remplir des bidons et/ou circuits divers, alors que dans l'art antérieur il faut un embout spécifique pour chaque goulot.

En outre, l'étanchéité est réalisée sur toute la périphérie du goulot et non plus en quatre points comme dans l'art antérieur, ceci sans détérioration du filetage.

En cas de défaut l'arrêt est possible et le dévissage peut être effectué manuellement.

La tête de vissage et l'embout de centrage simulent un bouchon pendant les opérations de test et de remplissage qui sont donc réalisés en condition d'utilisation.

Enfin, l'embout n'est pas obligatoirement coudé comme sur les figures, il peut être rectiligne.

## Revendications

1. Embout de remplissage ou de test des bidons ou circuits hydrauliques, préférentiellement les bidons ou circuits des lignes de montage de véhicules automobiles, du type comportant :
- un corps (1) composé d'un manchon-poignée (2) de préhension relié à une armoire de test par une gaine de liaison (3) et des connexions électriques et pneumatiques,
- et une tête de centrage (4), équipée d'une interface entre l'embout de remplissage et un goulot du bidon ou du circuit à remplir ou tester,
**caractérisé en ce que** l'interface comporte une tête de vissage (5) composée d'un corps cylindrique (6) et d'un filetage intérieur (12) correspondant au filetage du goulot à mettre en étanchéité, et **en ce que** l'embout de remplissage comporte des moyens de vissage motorisé entraînant en rotation le corps (6) de la tête (5) vissable sur ledit goulot, et comporte un joint (20) logé dans un embout de centrage (8) et venant en contact de la bordure supérieure dudit goulot.

2. Embout de remplissage selon la revendication 1, **caractérisé en ce qu'**il comporte des moyens pour arrêter le vissage de la tête de vissage dès qu'un effort prédéterminé de serrage est atteint.

3. Embout de remplissage selon l'une des revendications 1 à 2, **caractérisé en ce que** à l'intérieur de la tête de vissage (5) se trouve un système de centrage de l'embout sur le goulot composé d'un embout de centrage (8) de diamètre extérieur prévu pour être ajusté au diamètre intérieur du goulot et d'un système compliant composé d'un ressort (7) et d'une bague de butée (11) permettant de garantir le centrage tout au long du vissage.

4. Embout de remplissage selon la revendication 3, **caractérisé en ce que** un joint annulaire (20) est logé dans une gorge située sous une collerette de l'embout de centrage (8).

5. Embout de remplissage selon l'une des revendications 3 à 4, **caractérisé en ce que** l'embout de centrage (8) est emmanché sur un coulisseau (13) tubulaire coaxial avec la tête de centrage et la tête de vissage.

6. Embout de remplissage selon l'une des revendications 1 à 3, **caractérisé en ce que** l'embout de centrage (8) est emmanché sur un axe longitudinal (26) fixe.

7. Embout de remplissage selon l'une des revendications 5 à 6, **caractérisé en ce que** l'alésage interne longitudinal du coulisseau (13) ou de l'axe (26) débouche en sous face de l'embout de centrage et il est raccordé en partie haute par un raccord (19) prévu pour recevoir une gaine d'amenée d'air ou de liquide.

8. Embout de remplissage selon l'une des revendications 6 à 7, **caractérisé en ce que** la tête de vissage (5) est fixée par une pluralité de vis vissées dans les trous filetés (14), à un support (15) entraînable en rotation.

## Claims

1. Filling nozzle for filling or testing hydraulic tanks or circuits, preferably the tanks or circuits of assembly lines of motor vehicles, of the type including:
- a body (1) composed of a gripping sleeve handle (2) connected to a test chamber by a connecting line (3) and electrical and pneumatic connections,
- and a centring head (4), fitted with an interface between the filling nozzle and a neck of the tank or of the circuit to be filled or tested,
**characterised in that** the interface includes a screwing head (5) composed of a cylindrical body (6) and an internal thread (12), which thread corresponds to the thread of the neck to be sealed, and **in that** the filling nozzle includes motor-driven screwing means which rotationally entrain the body (6) of the head (5) which can be screwed onto said neck, and includes a joint (20) which is accommodated in a centring nozzle (8) and comes into contact with the upper edge of said neck.

2. Filling nozzle according to claim 1, **characterised in that** it includes means for stopping the screwing of the screwing head as soon as a predetermined tightening force is reached.

3. Filling nozzle according to one of claims 1 to 2, **characterised in that**, inside the screwing head (5), there is a system for centring the nozzle on the neck, which system is composed of a centring nozzle (8), with an external diameter intended to be adjusted to the external diameter of the neck, and a compliant system composed of a spring (7) and a stop ring (11), which permit centring to be guaranteed throughout the screwing operation.

4. Filling nozzle according to claim 3, **characterised in that** an annular joint (20) is accommodated in a groove situated beneath a flange of the centring nozzle (8).

5. Filling nozzle according to one of claims 3 to 4, **characterised in that** the centring nozzle (8) is fitted on a tubular slide (13), which is coaxial with the centring head and the screwing head.

6. Filling nozzle according to one of claims 1 to 3, **characterised in that** the centring nozzle (8) is fitted on a fixed longitudinal spindle (26).

7. Fitting nozzle according to one of claims 5 to 6, **characterised in that** the longitudinal internal bore of the slide (13) or of the spindle (26) emerges in the lower face of the centring nozzle, and it is connected in the upper portion by a connection (19), provided to receive an air or liquid supply line.

8. Filling nozzle according to one of claims 6 to 7, **characterised in that** the screwing head (5) is fixed, by a plurality of screws screwed into the threaded holes (14), to a support (15) which can be rotationally entrained.

## Patentansprüche

1. Füll- oder Teststutzen für Kanister oder Hydraulikkreise, vorzugsweise für Kanister oder Kreisläufe der Montageanlagen von Kraftfahrzeugen, von der Art, die aufweist:
- einen Körper (1), bestehend aus einem Muffen-Haltegriff (2), der mit einem Testschrank über eine Verbindungshülle (3) und elektrische und pneumatische Anschlüsse verbunden ist,
- und einen Zentrierkopf (4), der mit einer Schnittstelle zwischen dem Füllstutzen und einem Hals des zu füllenden oder zu testenden Kanisters oder Kreislaufs ausgestattet ist,
**dadurch gekennzeichnet, dass** die Schnittstelle einen Schraubkopf (5) aufweist, der aus einem zylindrischen Körper (6) und einem Innengewinde (12) besteht, das dem Gewinde des abzudichtenden Halses entspricht, und dass der Füllstutzen Einrichtungen zum motorisierten Verschrauben, die den Körper (6) des auf den Hals schraubbaren Kopfs (5) in Drehung versetzen, und eine Dichtung (20) aufweist, die in einem Zentrierstutzen (8) angeordnet ist und mit dem oberen Rand des Halses in Kontakt kommt.

2. Füllstutzen nach Anspruch 1, **dadurch gekennzeichnet, dass** er Einrichtungen aufweist, um das Verschrauben des Schraubkopfs anzuhalten, sobald eine vorbestimmte Spannkraft erreicht ist.

3. Füllstutzen nach einem der Ansprüche 1 bis 2, **dadurch gekennzeichnet, dass** sich im Inneren des Schraubkopfs (5) ein System zum Zentrieren des Stutzens auf dem Hals befindet, das aus einem Zentrierstutzen (8) mit einem Außendurchmesser, der vorgesehen ist, um an den Innendurchmesser des Halses angepasst zu werden, und aus einem aus einer Feder (7) und aus einem Anschlagring (11) bestehenden nachgiebigen System besteht, das die Gewährleistung der Zentrierung während des ganzen Schraubvorgangs ermöglicht.

4. Füllstutzen nach Anspruch 3, **dadurch gekennzeichnet, dass** eine Ringdichtung (20) in einer Rille angeordnet ist, die sich unter einem Kragen des Zentrierstutzens (8) befindet.

5. Füllstutzen nach einem der Ansprüche 3 bis 4, **dadurch gekennzeichnet, dass** der Zentrierstutzen (8) auf ein rohrförmiges Gleitstück (13) koaxial zum Zentrierkopf und zum Schraubkopf aufgeschoben wird.

6. Füllstutzen nach einem der Ansprüche 1 bis 3, **dadurch gekennzeichnet, dass** der Zentrierstutzen (8) auf eine ortsfeste Längsachse (26) aufgeschoben wird.

7. Füllstutzen nach einem der Ansprüche 5 bis 6, **dadurch gekennzeichnet, dass** die innere Längsbohrung des Gleitstücks (13) oder der Achse (26) an der Unterseite des Zentrierstutzens mündet und im oberen Bereich durch einen Anschluss (19) angeschlossen ist, der vorgesehen ist, um eine Luft- oder Flüssigkeitszufuhrhülle aufzunehmen.

8. Füllstutzen nach einem der Ansprüche 6 bis 7, **dadurch gekennzeichnet, dass** der Schraubkopf (5) durch mehrere Schrauben, die in Gewindelöcher (14) geschraubt sind, an einem in Drehung versetzbaren Träger (15) befestigt wird.
